(19) Europäisches Patentamt

European Patent Office

Office européen des brevets

(11) **EP 2 852 043 A1**

(12) **EUROPEAN PATENT APPLICATION**

(43) Date of publication:
**25.03.2015 Bulletin 2015/13**

(51) Int Cl.:
**H02M 7/483** (2007.01)

(21) Application number: **13185595.9**

(22) Date of filing: **23.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALSTOM Technology Ltd
5400 Baden (CH)**

(72) Inventors:
• **The inventors have agreed to waive their entitlement to designation.**

(74) Representative: **Mitchell, Darren Andrew
Potter Clarkson LLP
Patents
The Belgrave Centre
Talbot Street
Nottingham Nottinghamshire NG1 5GG (GB)**

(54) **Improvements in or relating to power modules for use in power transmission networks**

(57)     A configurable power module (10; 80; 90; 140) comprises a first sub-module (12) which includes a first pair (18) of series-connected switching elements (20, 22) that are separated by a first connection terminal (24) and are connected in parallel with a first energy storage device (26). The configurable power module (10; 80; 90; 140) also includes a second sub-module 14 which includes a second pair 36 of series-connected switching elements (38, 40) that are separated by a second connection terminal (42) and are connected in parallel with a second energy storage device (44). The first and second sub-modules (12, 14) are interconnected by a connection module (16) which is operable to interconnect the first and second sub-modules (12, 14) in first and second connection modes. The connection module (16), in the first connection mode, establishes a parallel connection between the first and second energy storage devices (26, 44) which has bidirectional current flow characteristics. The connection module (16), in the second connection mode, interconnects the first and second energy storage devices (26, 44) to permit the first and second energy storage devices (26, 44) to charge and generate a blocking voltage to oppose the flow of current between the first and second connection terminals (24, 42).

Figure 1(a)

EP 2 852 043 A1

**Description**

This invention relates to a configurable power module for use in a power transmission network, and more particularly for use in a high voltage direct current (HVDC) power transmission network, and to each of a voltage source converter and a direct current circuit breaker apparatus including such a module, as well as methods of configuring such a module.

According to a first aspect of the invention there is provided a configurable power module, for use in a power transmission network, comprising:

a first sub-module including a first pair of series-connected switching elements separated by a first connection terminal and connected in parallel with a first energy storage device; and
a second sub-module including a second pair of series-connected switching elements separated by a second connection terminal and connected in parallel with a second energy storage device,
the first and second sub-modules being interconnected by a connection module operable to interconnect the first and second sub-modules in first and second connection modes, the connection module in the first connection mode establishing a parallel connection between the first and second energy storage devices which has bidirectional current flow characteristics, and the connection module in the second connection mode interconnecting the first and second energy storage devices to permit the first and second energy storage devices to combine and generate a blocking voltage to oppose the flow of current between the first and second connection terminals.

The inclusion of a connection module which is operable to interconnect first and second sub-modules in a first connection mode in which a parallel connection is established between first and second energy storage devices of corresponding sub-modules helps to reduce conduction losses within the configurable power module as a whole because current flow can be shared within the parallel connection during, e.g. normal operation of the configurable power module.

In the meantime, the inclusion of a connection module which is additionally operable to interconnect the first and second sub-modules in a second connection mode in which the energy storage devices are able to combine and generate a blocking voltage to oppose the flow of current, e.g. a fault current, provides the configurable power module with further useful functionality and so helps to render it more cost effective than, e.g. conventional power modules.

Optionally the connection module in the first connection mode establishes a parallel connection between the first and second energy storage devices which allows current to flow within the parallel connection in first and second opposite directions.

Allowing current to flow within the parallel connection in first and second opposite directions permits the configurable power module to selectively provide a positive voltage source or a negative voltage source (as well as zero voltage) which can be used, for example, respectively to increase or decrease an output voltage at an alternating current (AC) terminal of a voltage source converter. This in turn renders the configurable power module of the invention particularly suitable for use in step-wise waveform generation to approximate sinusoidal voltage waveforms.

Preferably the connection module includes:

a first limb which extends between a first side of each of the first and second energy storage devices;
a second limb which extends between a second side of each of the first and second energy storage devices; and
a first connection module portion which includes a first pair of bi-directional current flow control elements, one bi-directional current flow control element lying within the first limb and the other bi-directional current flow control element lying within the second limb, each of the bi-directional current flow control elements selectively blocking current flow through the corresponding limb in the same first direction and permitting current to flow through the corresponding limb in the same second direction opposite the first direction.

The inclusion of first and second limbs readily facilitates a parallel connection between the first and second sub-modules, while the inclusion of a bi-directional current flow control element in each limb provides a desired degree of control over the manner in which current flows through the connection module and in turn the first and second energy storage devices, such that fault current blocking in at least one first direction is possible.

Optionally the first connection module portion further includes a first unidirectional current flow control element which permits current to flow therethrough in only one direction, the first unidirectional current flow control element interconnecting the first and second limbs to selectively establish a first series connection between the first and second energy storage devices and permit current to flow through the connection module in the first direction when each of the first pair of bi-directional current flow control elements is blocking current flow in the first direction.

Providing the first connection module portion with a first unidirectional current flow control element increases the current flow path options through the connection module and facilitates fault current blocking in a second direction.

The connection module may include a plurality of first connection module portions, and adjacent pairs of the first connection module portions may be separated by a further energy storage device connected in parallel between the first and second limbs.

The inclusion of further parallel-connected energy storage devices allows the configurable power module to, if desired, generate a larger blocking voltage so as to adequately oppose a larger fault current.

In a preferred embodiment of the invention the connection module additionally includes a second connection module portion including a second pair of bi-directional current flow control elements one of which lies within the first limb and the other of which lies within the second limb, each of the second pair of bi-directional current flow control elements selectively blocking current flow through the corresponding limb in the same second direction opposite the first direction in which each of the first pair of bi-directional current flow control elements of the first connection module portion selectively blocks current flow, the second module portion further including a second unidirectional current flow control element which interconnects the first and second limbs to establish a second series connection between the first and second energy storage devices and permits current to flow through the connection module in the second direction when each of the second pair of bi-directional current flow control elements is blocking current flow in the second direction, the second connection module portion lying next to the first connection portion to define a bi-directional module portion.

The inclusion of such a second connection module portion allows the configurable power module of the invention to make use of a greater possible blocking voltage, e.g. as provided for by the inclusion in the power module of a larger number of energy storage devices, to oppose a fault current flowing in each of first and second directions.

Optionally the connection module includes a plurality of first and second connection module portions lying next to one another to define respective bi-directional module portions, adjacent pairs of bi-directional module portions being separated by a further energy storage device connected in parallel between the first and second limbs.

Such an arrangement helps to maximise the available blocking voltage in both first and second directions.

Preferably the configurable power module further includes a control unit arranged in operative communication with each of the first and second sub-modules and the connection module, the control unit in use configuring the configurable power module to operate in a normal mode and in a fault blocking mode,
the control unit when configuring the configurable power module to operate in the normal mode operating the connection module in the first connection mode in which the parallel-connected energy storage devices combine with one another to form a larger combined energy store, and the control unit further switching on and off respective switching elements in the first and second modules to selectively direct current through the combined energy store such that the configurable power module is able to provide a voltage source commensurate in size with the larger size of the combined energy store, and
the control unit when configuring the configurable power module to operate in the fault blocking mode switching off all of the switching elements in the first and second sub-modules and operating the connection module in the second connection mode.

The inclusion of such a control unit provides the configurable power module with a first degree of desired functionality useful in voltage source converters.

According to a second aspect of the invention there is provided a voltage source converter comprising at least one converter limb which includes first and second limb portions each of which includes at least one configurable power module as described hereinabove and at least one half-bridge module.

Such a voltage source converter is able to utilise the lower capital cost and lower switching losses associated with the or each conventional half-bridge module while at the same time allowing the voltage source converter to block a fault current in a second direction in which half-bridge modules ordinarily are unable to block.

The configurable power module may further include a control unit arranged in operative communication with each of the first and second sub-modules and the connection module, the control unit in use configuring the configurable power module to operate in a normal mode and in a fault blocking mode,
the control unit when configuring the configurable power module to operate in the normal mode switching off all of the switching elements in the first and second sub-modules and operating the bi-directional current flow control elements in the connection module to block current flow between the first and second connection terminals, and
the control unit when configuring the configurable power module to operate in the fault blocking mode carrying out the following operations in the following order:

(i) switching on all of the switching elements in the first and second sub-modules and operating the bi-directional current flow control elements in the connecting module to permit current flow between the first and second connection terminals;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing between the first and second connection terminals.

Preferably the control unit in use configures the configurable power module to operate in a first fault blocking mode to block a fault current flowing in the first direction between the first and second connection terminals, the control unit when so configuring the configurable power module carrying out the following operations in the following order:

(i) switching on all of the switching elements in the first and second sub-modules and operating the bi-directional current flow control elements in the connection module to permit current flow in the first direction;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing in the first direction.

The control unit may in use additionally configure the configurable power module to operate in a second fault blocking mode to block a fault current flowing in the second direction between the first and second connection terminals, the control unit when so configuring the configurable power module carrying out the following operations in the following order:

(i) switching on all of the switching elements in the first and second sub-modules and operating the bi-directional current flow control elements in the connection module to permit current flow in the second direction;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing in the second direction.

The inclusion of such a control unit provides the configurable power module with various a second degrees of desired functionality useful in direct current circuit breaker apparatuses.
Optionally the control unit when operating the connection module in its second connection mode operates the connection module to interconnect the plurality of energy storage devices in series with one another.
Interconnecting the plurality of energy storage devices in series with one another leads to a summing of the energy stored by each one such that when combined they are able together to generate a blocking voltage which is greater than that which each alone could generate, and so when combined in such a way the configurable power module is able to oppose a larger fault current.
In another preferred embodiment of the invention the control unit when operating the connection module in its second connection mode progressively interconnects respective ones of the plurality of energy storage devices.
Such progressive interconnecting of respective ones of the plurality of energy storage devices, i.e. interconnecting individual energy storage devices singularly or within small groups, allows the configurable power module to modify, i.e. sculpt, the shape of a fault current waveform, e.g. so as to give a low rate of change of current as the fault current is extinguished. Such sculpting of the fault current waveform means that extinguishing the fault current can be achieved at a point when the energy storage in the various energy storage devices within the configurable power module is minimised so as to minimise also any corresponding over voltage.
Preferably each energy storage device includes a surge arrester connected in parallel therewith.
The inclusion of such a surge arrester associated with each energy storage device limits the energy stored by each energy storage device to a defined level.
According to a third aspect of the invention there is provided a direct current circuit breaker apparatus comprising main and ancillary current paths, the main current path including an electronic switch and a mechanical circuit breaker arranged in series with one another, and the ancillary current path including a configurable power module as described hereinabove.
The configurable power module within such a circuit breaker apparatus presents a high impedance during operation in its normal mode, and when configured to operate in its fault blocking mode is able initially to present a low impedance to a fault current, then control the rate of change of voltage as contacts in the mechanical circuit breaker begin to part, before controlling transient over voltage once the said contacts are open.
According to a fourth aspect of the invention there is provided a method of configuring a configurable power module according as described hereinabove wherein:

configuring the configurable power module to operate in a normal mode comprises the steps of:

(a) operating the connection module in the first connection mode in which the parallel-connected energy storage devices combine with one another to form a larger combined energy store; and
(b) switching on and off respective switching elements in the first and second modules to selectively direct current through the combined energy store such that the configurable power module provides a voltage source commensurate in size with the larger size of the combined energy store; and

configuring the configurable power module to operate in a fault blocking mode comprises the steps of:

(c) switching off all of the switching elements in the first and second sub-modules; and

(d) operating the connection module in the second connection mode.

Such a method provides the configurable power module with a first degree of desired functionality useful in voltage source converters.

According to a fifth aspect of the invention there is provided a method of configuring a configurable power module as described hereinabove wherein:

configuring the configurable power module to operate in a normal mode comprises the steps of:

(a) switching off all of the switching elements in the first and second sub-modules; and

(b) operating the bi-directional current flow control elements in the connection module to block current flow between the first and second connection terminals; and

configuring the configurable power module to operate in the fault blocking mode comprises in the following order the steps of:

(c) switching on all of the switching elements in the first and second sub-modules and operating the bi-directional current flow control elements in the connection module to permit current flow between the first and second connection terminals;

(d) switching off one of the switching elements in each of the first and second sub-modules to direct current to flow through each of the plurality of energy storage devices and thereby store energy in each said energy storage device; and

(e) operating the connection module in its second connection mode to permit each of the plurality of energy storage devices to combine and generate a blocking voltage to oppose a fault current flowing between the first and second connection terminals.

Such a method provides the configurable power module with a second degree of desired functionality which is useful in direct current circuit breaker apparatuses.

There now follows a description of preferred embodiments of the invention, by way of non-limiting example, with reference being made to the following figures in which:

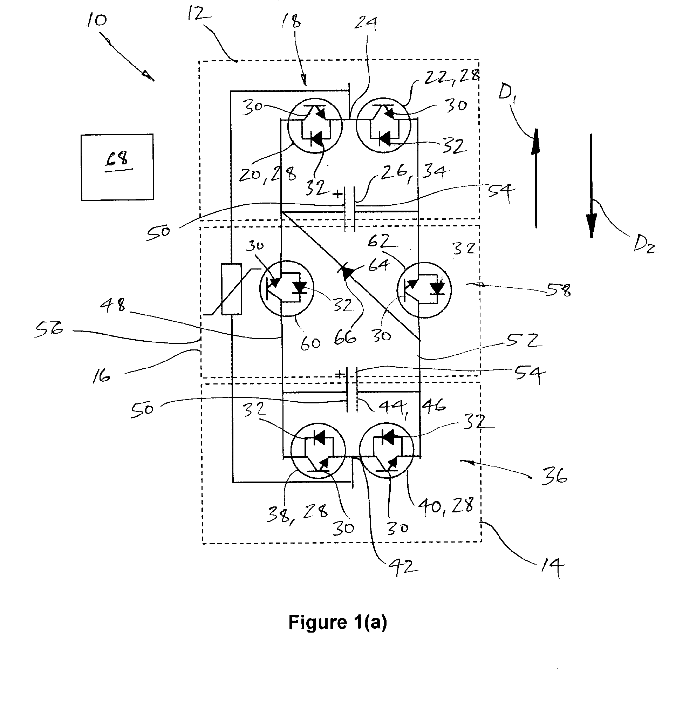

Figure 1(a) shows a schematic view of a configurable power module according to a first embodiment of the invention;

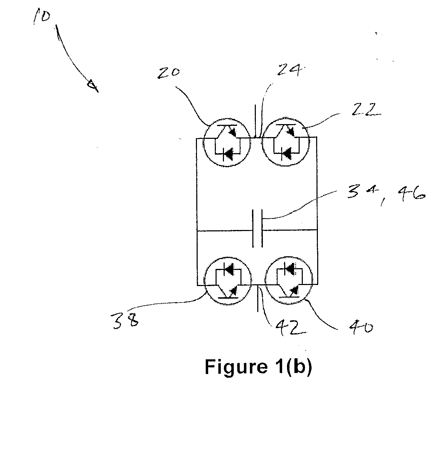

Figure 1(b) shows a further schematic view of the configurable power module shown in Figure 1 (a) when configured to operate in a normal mode;

Figures 2(a) to 2(d) illustrate schematically operation of the configurable power module shown in Figure 1 in respective fault blocking modes;

Figure 3 shows a schematic view of a configurable power module according to a second embodiment of the invention;

Figures 4(a) and 4(b) illustrate schematically operation of the configurable power module shown in Figure 3 in respective fault blocking modes;

Figure 5 shows a schematic view of a configurable power module according to a third embodiment of the invention;

Figures 6(a) and 6(b) illustrate schematically operation of the configurable power module shown in Figure 5 in respective fault blocking modes;

Figure 7 shows a schematic view of a voltage source converter incorporating a configurable power module according to an embodiment of the invention;

Figure 8 shows a schematic view of a configurable power module according to a fourth embodiment of the invention;

Figures 9(a) and 9(d) illustrate schematically operation of the configurable power module shown in Figure 8 in normal and fault blocking modes;

Figure 10 shows a schematic view of a direct current circuit breaker apparatus incorporating the configurable power module shown in Figure 8;

Figure 11 shows a schematic view of a configurable power module according to a fifth embodiment of the invention; and

Figures 12(a) to 12(d) illustrate schematically operation of the configurable power module shown in Figure 11.

A configurable power module according to a first embodiment of the invention is designated generally by reference numeral 10.

The first configurable power module 10 includes first and second sub-modules 12, 14 which are interconnected by a connection module 16 that is operable to interconnect the first and second sub-modules 12, 14 in first and second connection modes.

The first sub-module 12 has a first pair 18 of first and second switching elements 20, 22 which are separated by a first connection terminal 24, and which are connected in parallel with a first energy storage device 26.

In the embodiment shown each of the switching elements 20, 22 is a bi-directional current flow control element 28 which selectively blocks current flow therethrough in one direction while always permitting current to flow in another, opposite direction. More particularly, each bi-directional current flow control element 28 includes a semiconductor device 30 in the form of, e.g. an Insulated Gate Bipolar Transistor (IGBT), which is connected in parallel with an anti-parallel diode 32. It is, however, possible to use another semiconductor device 30 instead of an IGBT.

In addition, in the embodiment shown the first energy storage device 26 is a first capacitor 34, although other forms of energy storage device are also possible.

The second sub-module 14 has a second pair 36 of third and fourth switching elements 38, 40 which are separated by a second connection terminal 42, and which are connected in parallel with a second energy storage device 44. Each of the third and fourth switching elements 38, 40 is a bi-directional current flow control element 28 of the type described immediately above, and the second energy storage device 44 is a second capacitor 46, although other forms of energy storage device are again also possible.

The connection module 16 includes a first limb 48 which extends between a first side 50 of each of the first and second energy storage devices 26, 44, i.e. the first and second capacitors 34, 46. The connection module 16 also includes a second limb 52 which extends between a second side 54 of each of the first and second capacitors 34, 46. In the embodiment shown each of the first and second capacitors 34, 46 is arranged so that its respective first side 50 is the positive side thereof.

In addition the connection module 16 includes a first connection module portion 56 which includes a first pair 58 of first and second further bi-directional current flow control elements 60, 62. The first further bi-directional current flow control element 60 lies within the first limb 48 while the second lies within the second limb 52.

In the embodiment shown each of the further bi-directional current flow control elements 60, 62 is similar to the bi-directional current flow control elements 28 which form the first, second, third and fourth switching elements 20, 22, 38, 40 described above, and to that end each further bi-directional current flow control element 60, 62 selectively blocks current flow through its given limb 48, 52 in one direction while always permitting current to flow through the same limb 48, 52 in another, opposite direction. More particularly each of the further bi-directional current flow control elements 60, 62 is arranged so that they both selectively block current flow through the corresponding limb 48, 52 in the same first direction $D_1$, while always allowing current flow through the given limb 48, 52 in the same second direction $D_2$ which is opposite the first direction $D_1$. Other types of further bi-directional current flow control elements 60, 62 are also possible.

The first connection module portion 56 also includes a first unidirectional current flow control element 64 which permits current flow therethrough in only one direction. In the embodiment shown the first unidirectional current flow control element 64 is a first diode 66.

The first diode 66 interconnects the first and second limbs 48, 52 and, more particularly, establishes a current flow path from the second side 54 of the second capacitor 46 to the first side 50 of the first capacitor 34 so as to selectively establish a first series connection between the first and second capacitors 34, 46 which permits current to flow through the connection module 16 in the first direction $D_1$ when each of the first pair 58 of further bi-directional current flow control elements 60, 62 is otherwise blocking current flow in the first direction $D_1$.

The first configurable power module 10 also includes a first control unit 68 which is arranged in operative communication with each of the first and second sub-modules 12, 14 and the connection module 16.

In use the first control unit 68 configures the first configurable power module 10 to operate in a normal mode and in a fault blocking mode.

When configuring the first configurable power module 10 to operate in the normal mode the first control unit 68 operates the connection module 16 in the first connection mode and, more particularly, establishes a parallel connection between the first and second capacitors 34, 46 by switching on each of the first and second further bi-directional current flow control elements 60, 62. The parallel connection between the first and second capacitors 34, 46 has bidirectional flow characteristics in the sense that current is allowed to flow through the parallel connection in the first and second directions $D_1$, $D_2$. In this manner the first control unit 68 combines the first and second capacitors 34, 46 with one another to form a larger effective capacitance (equal to the sum of the capacitance of the first and second capacitors 34, 46).

Thereafter the first control unit 68 switches on and off respective switching elements 20, 22, 38, 40 to selectively direct current through the combined capacitors 34, 36 so that the first configurable power module 10 provides a positive or negative voltage source commensurate in size with the larger size of the combined capacitors 34, 36. More particularly, the parallel connection between the first and second capacitors 34, 36 additionally allows current to flow into and out of the first and second capacitors 34, 46, i.e. through the first and second capacitors 34, 46, in first and second directions so as to selectively permit the provision of the aforementioned positive and negative voltage sources.

The first control unit 68 also controls switching of the first, second, third and fourth switching elements 20, 22, 38, 40 to selectively bypass the first and second capacitors 34, 46 and thereby cause the first configurable power module 10 to provide a zero voltage source while permitting current to flow therethrough in each of the first and second directions $D_1$, $D_2$.

In a particular normal mode of operation the first control unit 68 switches off the third switching element 38 and switches on the fourth switching element 40 in the second pair 36 of switching elements (or vice versa) to arrange the first configurable power module 10 in a pseudo half-bridge arrangement. Such an arrangement is able only to provide a positive voltage source or a zero voltage source, while conducting current in both directions, but it has lower switching losses than the same module 10 operated in a conventional full-bridge arrangement, as described above.

When configuring the first configurable power module 10 to operate in the fault blocking mode the first control unit 68 switches off all of the first, second, third and fourth switching elements 20, 22, 38, 40 in the first and second pairs 18, 36 of switching elements, and operates the connection module 16 in its second connection mode.

When operating the connection module 16 in its second connection mode the first control unit 68 also switches off both of the first and second further bi-directional current flow control elements 60, 62.

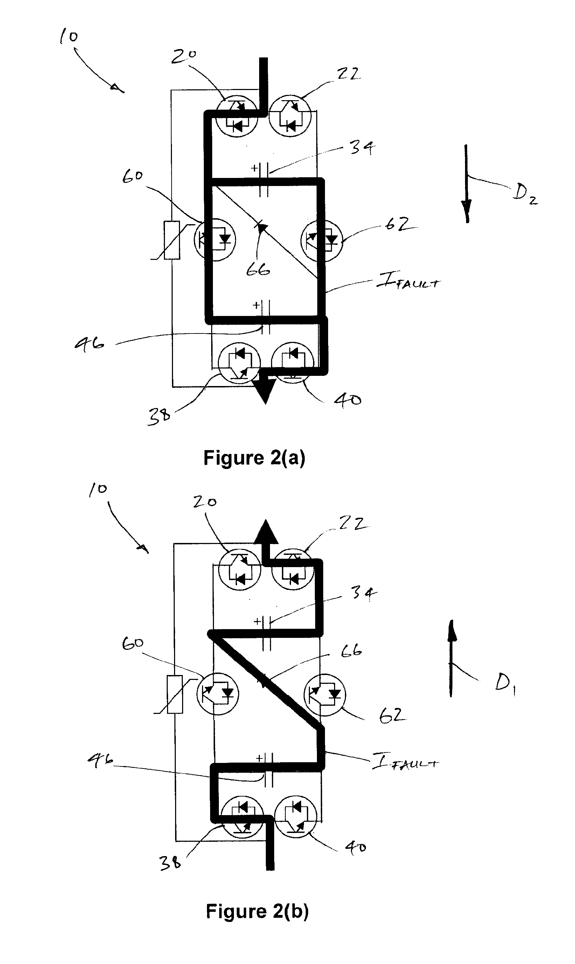

In response to a current, e.g. a fault current $I_{Fault}$, flowing in the second direction $D_2$, i.e. as shown in Figure 2(a), the anti-parallel diode 32 in each of the first and fourth switching elements 20, 40 and in the first and second further bi-directional current flow control elements 60, 62 acts to interconnect the first and second capacitors 34, 46 in parallel with one another and thereby permit them to combine and generate a blocking voltage to oppose the said fault current $I_{Fault}$ flowing through the first configurable power module 10.

The first and second capacitors 34, 46 are connected in parallel and so the voltage across each one must be essentially the same. As a result the blocking voltage they are able to generate is commensurate only with the size of a single one of the first and second capacitors 34, 46.

In response to a fault current $I_{Fault}$ flowing in the first direction $D_1$, i.e. as shown in Figure 2(b), the anti-parallel diode 32 in each of the second and third switching elements 22, 38 together with the first unidirectional current flow control element 64, i.e. the first diode 66, act to interconnect the first and second capacitors 34, 46 in series with one another in a first series arrangement. This again permits the first and second capacitors 34, 46 to combine and generate a blocking voltage to oppose the said fault current $I_{Fault}$ flowing through the first configurable power module 10.

However, because the first and second capacitors 34, 46 are connected in series in this instance the voltage across each one combines to provide a larger blocking voltage commensurate with a sum of the size of the first and second capacitors 34, 46, i.e. double in size.

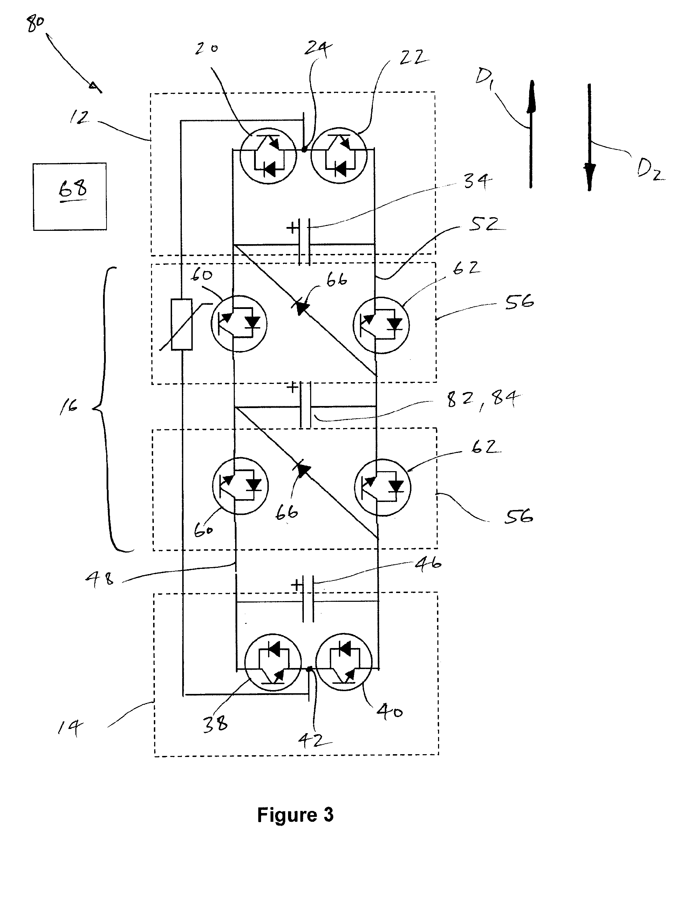

A configurable power module 80 according to a second embodiment of the invention is illustrated schematically in Figure 3. The second configurable power module 80 is similar to the first configurable power module 10 and like features share the same reference numerals.

However the second configurable power module 80 instead includes two first connection module portions 56 which are separated by a further energy storage device 82, in the form of a further capacitor 84, which is connected in parallel between the first and second limbs 48, 52.

Still further embodiments of the invention may include more than two first connection module portions 56 together with a similarly greater number of associated further energy storage devices 82, e.g. further capacitors 84.

In use the first control unit 68 configures the second configurable power module 80 to operate in normal and fault blocking modes which are very similar to those of the first configurable power module 10.

When configuring the second configurable power module 80 to operate in the normal mode the first control unit 68 again operates the connection module 16 in a first connection mode to establish a parallel connection between the first, second and further capacitors 34, 46, 84 and allow current to flow through the parallel connection in the first and second directions $D_1$, $D_2$ by switching on each of the first and second further bi-directional current flow control elements 60, 62 in each of the first connection module portions 56.

In this manner the first control unit 68 combines the first, second and further capacitors 34, 46, 84 with one another to form a larger effective capacitance (equal to the sum of the capacitance of the first, second and further capacitors 34, 46, 84).

Thereafter the first control unit 68 switches on and off respective switching elements 20, 22, 38, 40 to selectively direct current through the combined capacitors 34, 46, 84 so that the second configurable power module 80 provides a positive or negative voltage source commensurate in size with the larger size of the combined capacitors 34, 46, 84, i.e. triple in size.

When configuring the second configurable power module 80 to operate in the fault blocking mode the first control unit 68 switches off all of the first, second, third and fourth switching elements 20, 22, 38, 40 in the first and second pairs 18, 36 of switching elements, and operates the connection module 16 in a second connection mode.

When operating the connection module 16 in its second connection mode the first control unit 68 again switches off both of the first and second further bi-directional current flow control elements 60, 62, in each of the first connection module portions 56.

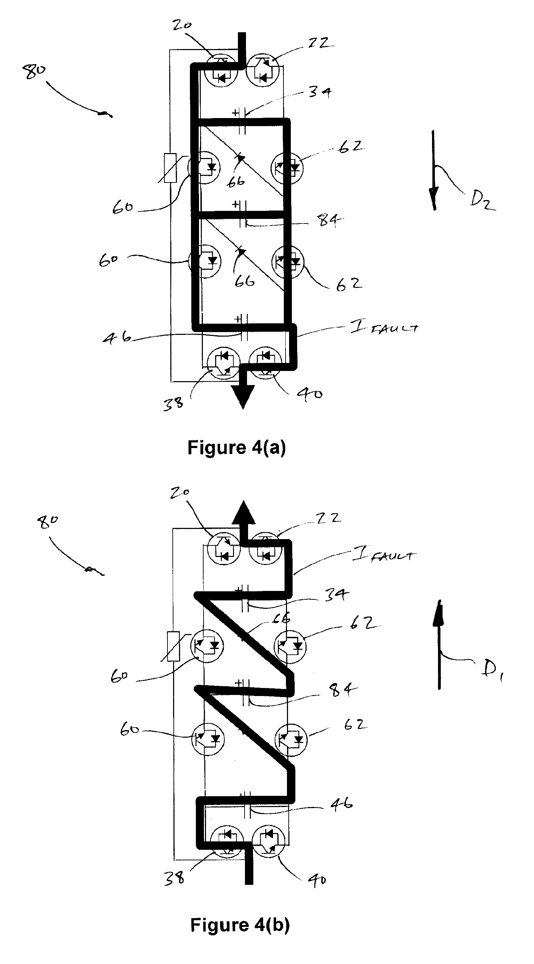

In response to a fault current $I_{Fault}$ flowing in the second direction $D_2$, i.e. as shown in Figure 4(a), the anti-parallel diode 32 in each of the first and fourth switching elements 20, 40 and in the first and second further bi-directional current flow control elements 60, 62 of each of the first connection module portions 56 acts to interconnect the first, second and further capacitors 34, 46, 84 in parallel with one another and thereby permit them to combine and generate a blocking voltage to oppose the said fault current $I_{Fault}$ flowing through the second configurable power module 80.

The first, second and further capacitors 34, 46, 84 are again connected in parallel and so the voltage across each one must be essentially the same. As a result the blocking voltage they are able to generate is commensurate only with the size of a single one of the first, second and further capacitors 34, 46, 84.

In response to a fault current $I_{Fault}$ flowing in the first direction $D_1$, i.e. as shown in Figure 4(b), the anti-parallel diode 32 in each of the second and third switching elements 22, 38 together with the first unidirectional current flow control element 64, i.e. the first diode 66, in each first connection module portion 56 act to interconnect the first, second and further capacitors 34, 46, 84 in series with one another. This again permits the first, second and further capacitors 34, 46, 84 to combine and generate a blocking voltage to oppose the said fault current $I_{Fault}$ flowing through the second configurable power module 80.

However the first, second and further capacitors 34, 46, 84 are connected in series and so the voltage across each one combines to provide a larger blocking voltage commensurate with a sum of the size of the first, second and further capacitors 34, 46, 84, i.e. triple in size.

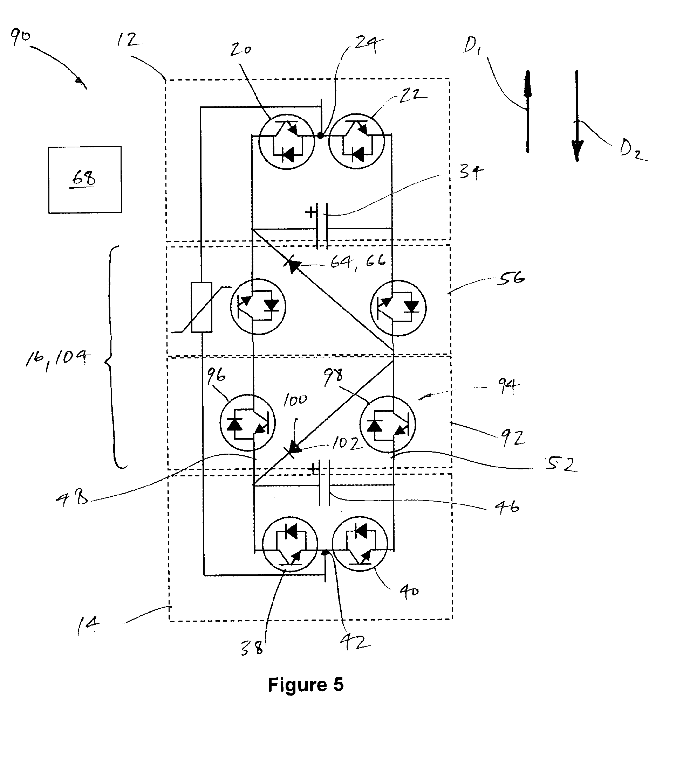

Figure 5 illustrates schematically a configurable power module 90 according to a third embodiment of the invention.

The third configurable power module 90 is similar to the first configurable power module 10 and like features share the same reference numerals.

The third configurable power module 90 differs from the first configurable power module 10 in that it includes a connection module 16 which additionally includes a second connection module portion 92.

The second connection module portion 92 has a second pair 94 of third and fourth further bi-directional current flow control elements 96, 98. The third further bi-directional current flow control element 96 lies within the first limb 48 and the fourth further bi-directional current flow control element 98 lies within the second limb 52. The third and fourth further bi-directional current flow control elements 96, 98 are arranged in the opposite sense to each of the first and second further bi-directional current flow control elements, 60, 62 in that they both selectively block current flow through the corresponding limb 48, 52 in the second direction $D_2$, i.e. opposite the first direction $D_1$ in which each of the first and second further bi-directional current flow control elements 60, 62 selectively block current.

The second connection module portion 92 also includes a second unidirectional current flow control element 100 in the form of a second diode 102.

The second diode 102 again interconnects the first and second limbs 48, 52 but instead establishes a current flow path from the second side 54 of the first capacitor 34 to the first side 50 of the second capacitor 46 (via the second further bi-directional current flow control element 62) so as to selectively establish a second series connection between the first and second capacitors 34, 46 which permits current to flow through the connection module 16 in the second direction $D_2$ when each of the first and second pairs 58, 94 of further bi-directional current flow control elements 60, 62, 96, 98 is otherwise blocking current flow in the second direction $D_2$.

The second connection module portion 92 lies immediately next to the first connection module portion 56 and in this manner the two connection module portions 56, 92 together define a bi-directional module portion 104.

Further embodiments of the invention may include a connection module 16 which has a plurality of such bi-directional module portions 104, adjacent pairs of which are separated by a still further energy storage device, e.g. a still further capacitor, connected in parallel between the first and second limbs 48, 52.

In use the first control unit 68 configures the third configurable power module 90 to again operate in normal and fault blocking modes which are similar to those of the first configurable power module 10.

When configuring the third configurable power module 90 to operate in the normal mode the connection module 16 is operated in the first connection mode, i.e. to establish a parallel connection between the first and second capacitors 34, 36, by additionally switching on each of the third and fourth further bi-directional current flow control elements 96, 98 in the second pair 94 of switching elements in the second connection module portion 92.

Thereafter it functions in essentially the same manner as the first configurable power module 10.

When configuring the third configurable power module 90 to operate in the fault blocking mode the connection module 16 is operated in its second connection mode by additionally switching off both of the third and fourth further bi-directional current flow control elements 96, 98, in the second connection module portion 92.

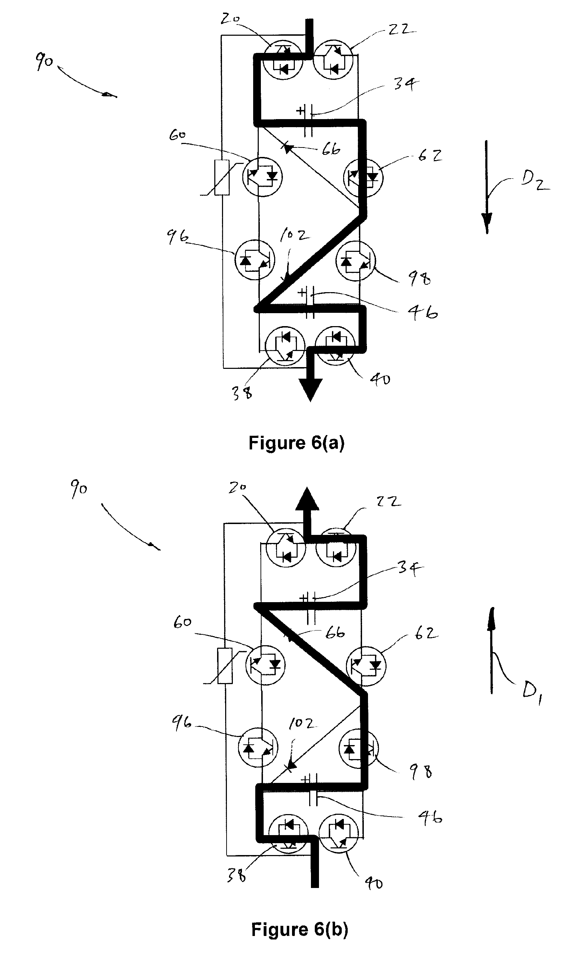

In response to a fault current $I_{Fault}$ flowing in the first direction $D_1$, i.e. as shown in Figure 6(b), the first unidirectional current flow control element 64, i.e. the first diode 66, in the first connection module portion 56 cooperates with the anti-parallel diode 32 in the fourth bi-directional current flow control element 98 of the second connection module portion 92 to interconnect the first and second capacitors 34, 46 in a first series connection. This again permits the first and second capacitors 34, 46 to combine and generate a blocking voltage to oppose the said fault current $I_{Fault}$ flowing through the third configurable power module 90. Moreover, the first and second capacitors 34, 46 are again connected in series and so a larger blocking voltage commensurate with a sum of the size of the first and second capacitors 34, 46, i.e. double in size, is provided.

In response to a fault current $I_{Fault}$ flowing in the second direction $D_2$, i.e. as shown in Figure 6(a), the second unidirectional current flow control element 100, i.e. the second diode 102, in the second connection module portion 92 cooperates with the anti-parallel diode 32 in the second further bi-directional current flow control element 62 of the first connection module portion 56 to interconnect the first and second capacitors 34, 46 in a second series connection. This permits the first and second capacitors 34, 46 to combine and generate a blocking voltage to oppose the said fault current $I_{Fault}$, and because first and second capacitors 34, 46 are connected in series a larger blocking voltage commensurate with a sum of the size of the first and second capacitors 34, 46, i.e. double in size, can be provided.

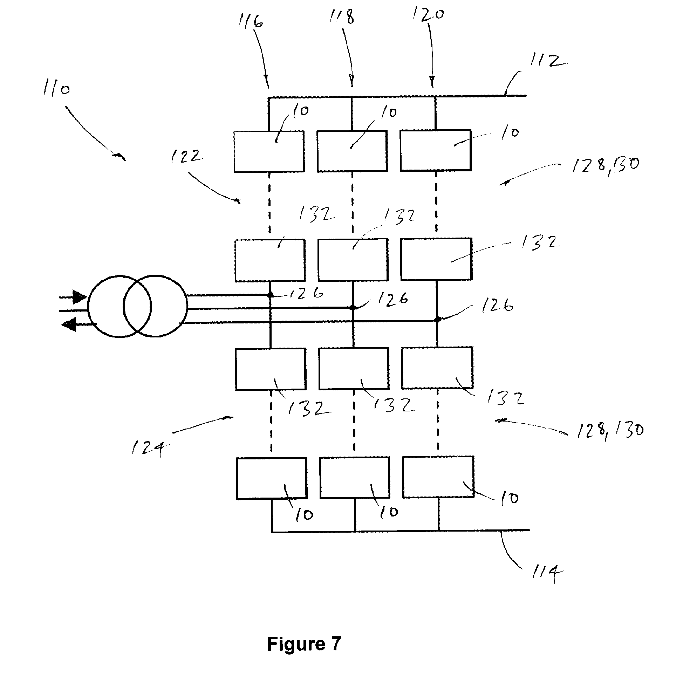

Figure 7 shows a schematic view of a voltage source converter 110 which includes first and second direct current (DC) terminals 112, 114 between which extends a first, second and third converter limb 116, 118, 120.

Each converter limb 116, 118, 120 includes first and second limb portions 122, 124 which are separated by an alternating current (AC) terminal 126.

Each limb portion 122, 124 includes a chain-link converter 128 which extends between the AC terminal 126 and a corresponding one of the first or the second DC terminal 112, 114.

Each chain-link converter 128 includes a plurality of series connected modules 130 which in turn includes a mix of conventional half-bridge modules 132 and first configurable power modules 10.

For example, if one third of the series connected modules 130 are first configurable power modules 10 then the total blocking voltage generated against a fault current $I_{Fault}$ flowing in the first direction $D_1$, i.e. as shown in Figure 2(b), is given by

$$V_{Blocking} = 2 \times 0.33 \times 2V_{DC}$$

Where $V_{DC}$ is the maximum voltage an individual first or second capacitor 34, 46 can generate, which typically is approximately 0.9 x the DC voltage between the first and second DC terminals 112, 114 such that

$$V_{Blocking} \approx 1.32/0.9$$

$$V_{Blocking} \approx 1.47V_{Fault}$$

which is adequate to quickly stop the fault current $I_{Fault}$ flowing in the first direction $D_1$.

If utilising the second configurable power module 80 it is possible to use fewer of these modules 80 because each is able to generate a greater blocking voltage in the first direction $D_1$ than the first configurable power module 10.

For example, having only 22% of the series connected modules 130 as second configurable power modules 80 still gives a total blocking voltage as follows

$$V_{Blocking} = 2 \times 0.22 \times 3V_{DC}$$

i.e.

$$V_{Blocking} \approx 1.47V_{Fault}$$

which is again adequate to quickly stop the fault current $I_{Fault}$ flowing in the first direction $D_1$.

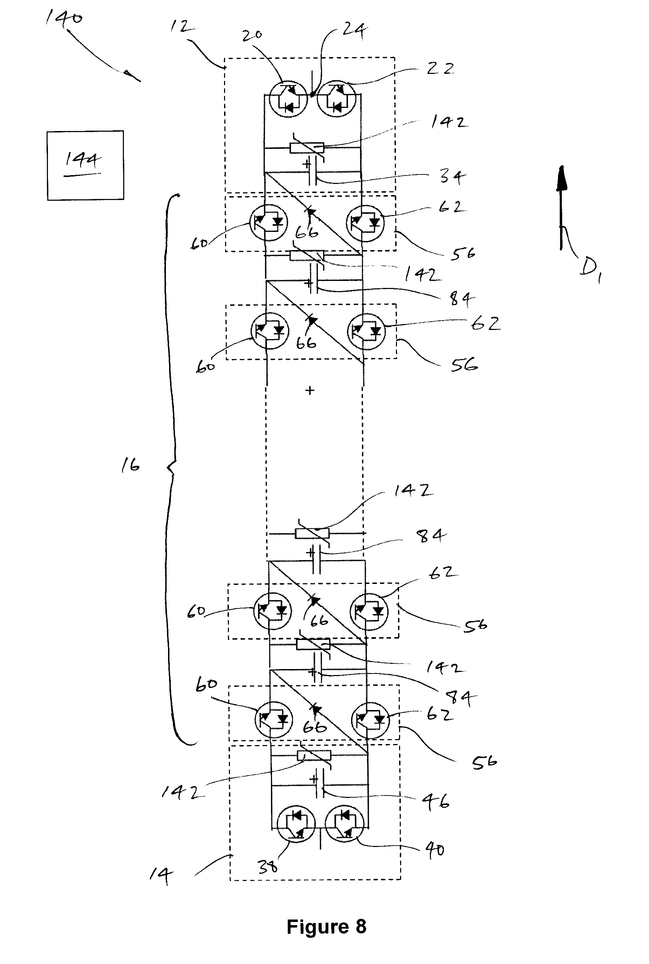

A configurable power module according to a fourth embodiment of the invention is designated generally by reference numeral 140, and is shown schematically in Figure 8.

The fourth configurable power module 140 is similar to the second configurable power module 80 but instead includes a greater number of first connection module portions 56 and associated further capacitors 84. Typically the fourth configurable power module 140 includes 10 or so such module portions 56.

In addition, each of the first and second and further capacitors 34, 46, 84 has a surge arrestor 142 connected in parallel therewith.

The fourth configurable power module 140 also includes a second control unit 144 which is again arranged in operative communication with each of the first and second sub-modules 12, 14 and the connection module 16.

The second control unit 144 in use again configures the fourth configurable power module 140 to operate in a normal mode and in a fault blocking mode.

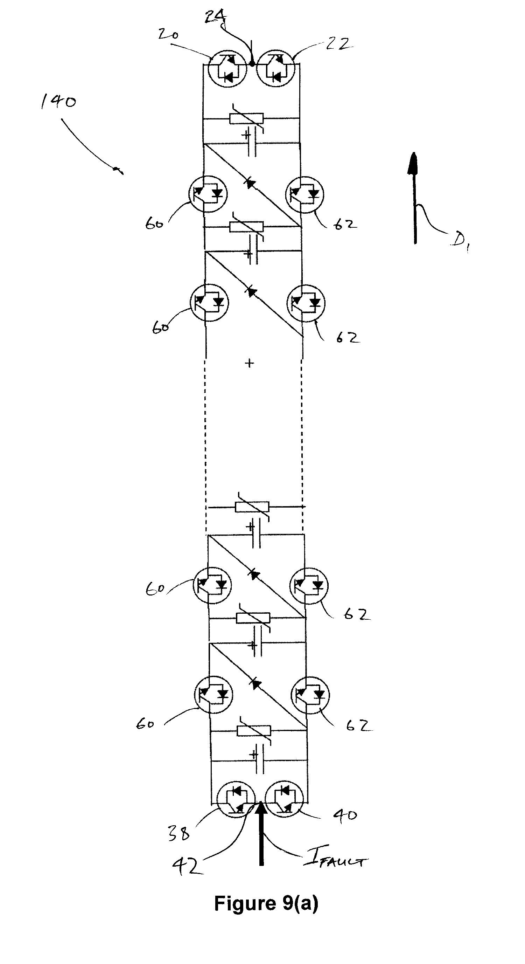

When configuring the fourth configurable power module 140 to operate in the normal mode the second control unit 144 switches off all of the first, second, third and fourth switching elements 20, 22, 38, 40 in the first and second sub-modules 12, 14, and operates each of the first and second further bi-directional current flow control elements 60, 62 in each of the plurality of first connection module portions 56 to block current flow in the first direction $D_1$, i.e. as shown in Figure 9(a).

Accordingly, when the fourth configurable power module 140 is configured to operate in this normal mode it presents a high impendence to any current attempting to flow from the second connection terminal 42 to the first connection terminal 24.

When configuring the fourth configurable power module 140 to operate in the fault blocking mode the second control unit 144 carries out the following operations in the following order.

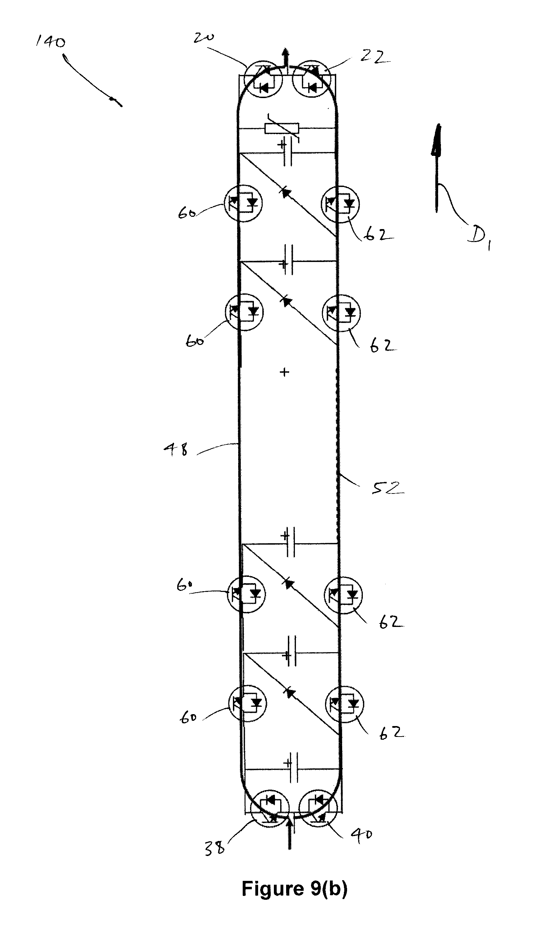

It first switches on all of first, second, third and fourth switching elements 20, 22, 38, 40 in the first and second sub-modules 12, 14 and it operates the first and second further bi-directional current flow control elements 60, 62 in each of the plurality of first connection module portions 56 to permit current flow in the first direction $D_1$, i.e. as shown schematically in Figure 9(b).

In this arrangement the fault current $I_{Fault}$ flows directly through the fourth configurable power module 140 and is shared between the first and second limbs 48, 52, and the corresponding string of first or second further bi-directional current flow control elements 60, 62, such that lower conduction losses arise.

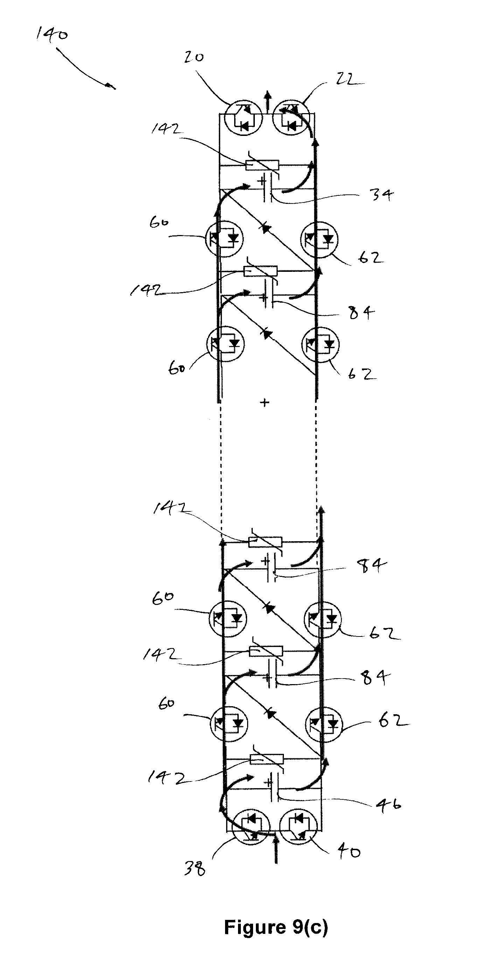

The second control unit 144 then switches off the first and fourth switching elements 20, 40 to direct the fault current $I_{Fault}$ to flow through each of the plurality of energy storage devices 26, 44, 82, i.e. each of the first, second and further capacitors 34, 46, 84 so as to store energy, i.e. charge, in each of the first, second and further capacitors 34, 46, 84, i.e. as shown in Figure 9(c).

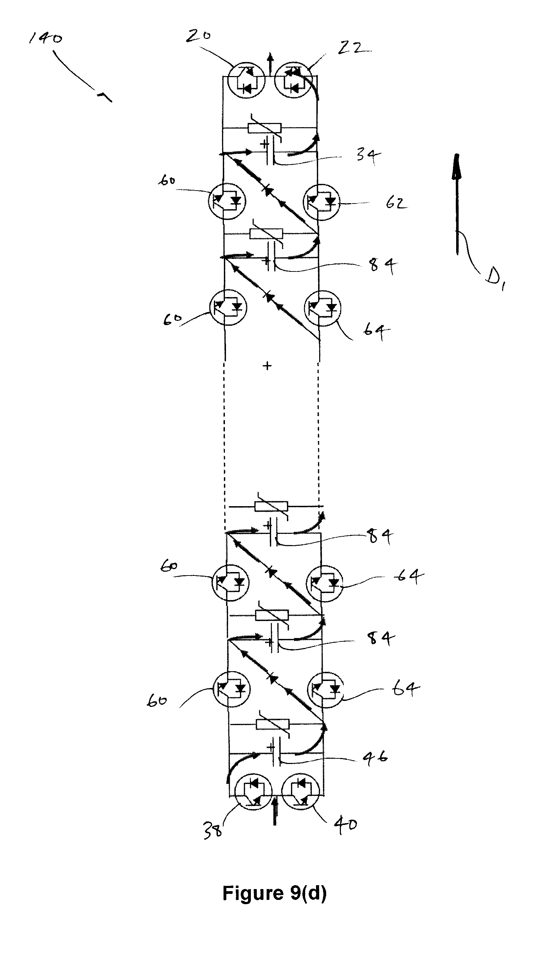

Thereafter the second control unit 144 operates the connection module 16 in its second connection mode, i.e. switches off each of the first and second further bi-directional current flow control elements 60, 62 in the various first connection module portions 56 in order to establish a first series connection between all of the capacitors 34, 46, 84 via the respective first unidirectional current flow control element 64, i.e. first diode 66 of each first connection module portion 56, i.e. as shown in Figure 9(d).

This permits each of the capacitors 34, 46, 84 to combine and generate a blocking voltage which is essentially equal to the sum of the voltage, i.e. charge, across each of the capacitors 34, 46, 84 to oppose the fault current $I_{Fault}$ flowing in the first direction $D_1$ and thereby extinguish the fault current $I_{Fault}$.

Such switching off of the first and second further bi-directional current flow control elements 60, 62 may be done progressively, e.g. in stages, in order to modify the waveform shape of the fault current $I_{Fault}$.

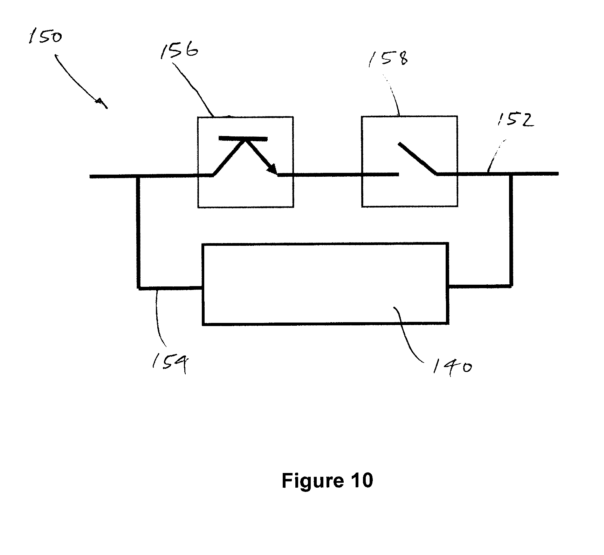

Figure 10 shows a schematic view of a DC circuit breaker apparatus 150 in which the fourth configurable power module 140 is incorporated.

More particularly the DC circuit breaker apparatus 150 includes main and ancillary current paths 152, 154.

The main current path 152 includes a low voltage electronic switch 156 which blocks current flow through the main current path 152 in the event of a fault arising. The main current path 152 also includes a mechanical circuit breaker 158 which is arranged in series with the electronic switch 156.

The ancillary current path 154 includes the fourth configurable power module 140 described above.

In use, in the absence of a fault, the fourth configurable power module 140 is configured to operate in its normal mode so as to present a high impendence in the ancillary current path 154.

Once a fault is detected, the low voltage electronic switch 156 is opened and the fault current $I_{Fault}$ is diverted from the main current path 152 and into the ancillary current path 154.

The second control unit 144 then switches on, i.e. closes, all of the first, second, third and fourth switching elements 20, 22, 38, 40 and the first and second further bi-directional current flow control elements 60, 62 so that the fault current $I_{Fault}$ flows directly through the fourth configurable power module 140 and associated ancillary current path 154, with the said fault current $I_{Fault}$ being shared between the first and second limbs 48, 52 of the connection module 16 as shown in Figure 9(b).

When the main contacts of the mechanical circuit breaker 158 are known, or assumed, to be opening then the first and fourth switching elements 20, 40 are turned off and the fault current $I_{Fault}$ flows through all of the parallel-connected capacitors 34, 46, 84 until the voltage across each capacitor 34, 46, 84 reaches the surge arrestor 142 level where upon the surge arrestors conduct, as shown in Figure 9(c). As the surge arrestors conduct in the aforementioned manner they dissipate energy from the connected electrical system.

During this period, i.e. as the main contacts of the mechanical circuit breaker 158 are opening, the rate of increase in voltage across the ancillary current path 154, and hence across the mechanical circuit breaker 158 is limited by the total parallel capacitance of the capacitors 34, 46, 84.

From this point forward selective first and second further bi-directional current flow control elements 60, 62 are switched off to allow the fault current $I_{Fault}$ to flow through series groups of capacitors 34, 46, 48 via the first diodes 66 until all of the capacitors 34, 46, 84 are connected in series, as shown in Figure 9(d) and the ancillary current path 154 generates the maximum blocking voltage to extinguish the fault current.

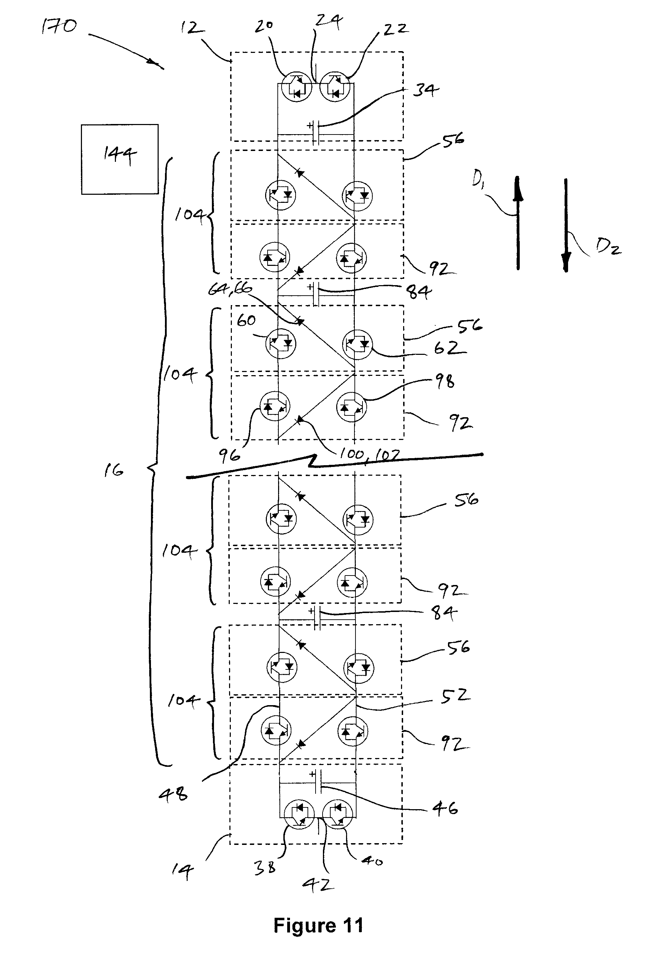

A configurable power module according to a fifth embodiment of the invention is designated generally by reference numeral 170, and is shown schematically in Figure 11.

The fifth configurable power module 170 is similar to the third configurable power module 90 shown in Figure 5 and like features share the same reference numerals. However, the fifth configurable power module 170 instead includes a greater number of first and second connection module portions 56, 92, i.e. bi-directional module portions 104, and associated further capacitors 84. Typically the fifth configurable power module 170 includes 10 or so such bi-directional module portions 104.

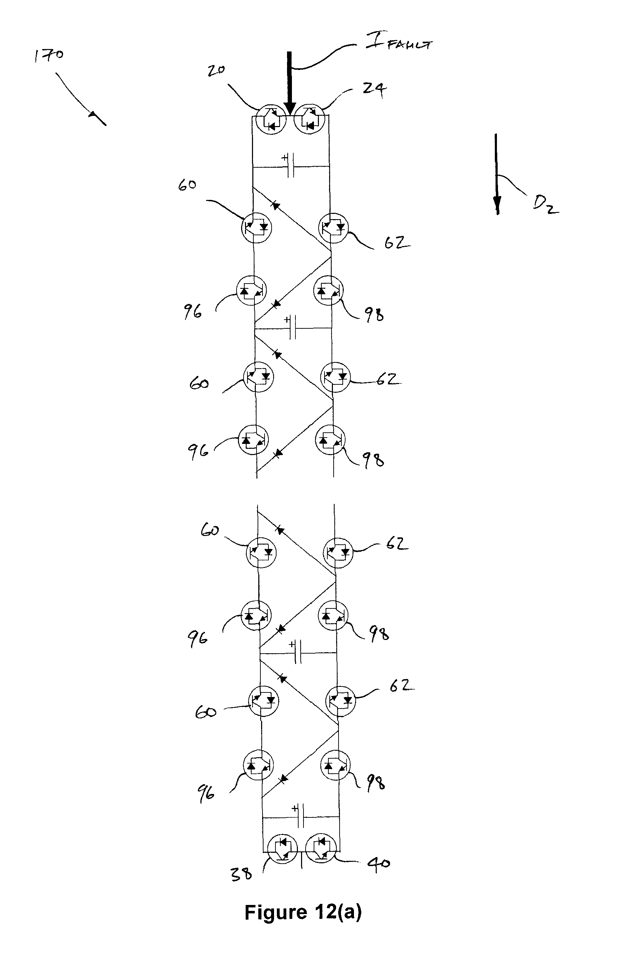

Each of the first and second and further capacitors 34, 46, 84 again has a surge arrestor connected in parallel therewith but these are omitted from each of Figures 11 and 12(a) to 12(d) for the sake of clarity.

The fifth configurable power module 170 again includes a second control unit 144 which is similarly arranged in operative communication with each of the first and second sub-modules 12, 14 and the connection module 16, i.e. the plurality of first and second connection module portions 56, 92.

The second control unit 144 in use again configures the fifth configurable power module 170 to operate in a normal mode, and it also configures the fifth configurable power module 170 to operate in a first fault blocking mode in which it blocks current flowing in the first direction $D_1$ flowing between the first and second connection terminals 24, 42, and in a second fault blocking mode in which it blocks current flowing in the second direction $D_2$ between the first and second connection terminals 24, 42.

When configuring the fifth configurable power module 170 to operate in the normal mode the second control unit 144 switches off all of the first, second, third and fourth switching elements 20, 22, 38, 40 in the first and second sub-modules 12, 14, and operates each of the first, second, third and fourth further bi-directional current flow control elements 60, 62, 96, 98 in each of the plurality of first and second connection module portions 56, 92 to block current flow therethrough. In this manner the fifth configurable power module 170 is able to block current flowing in the first direction $D_1$ between the first and second connection terminals 24, 42, i.e. in a similar manner to that shown in Figure 9(a) in connection with the fourth configurable power module 140, and also block current flowing in the second direction $D_2$ between the first and second connection terminal 24, 42, i.e. as shown in Figure 12(a).

Accordingly, when the fifth configurable power module 170 is configured to operate in this normal mode it presents a high impendence to any current attempting to flow from the second connection terminal 42 to the first connection terminal 24 and vice versa.

When configuring the fifth configurable power module 170 to operate in the first fault blocking mode the second control unit 144 carries out the essentially the same operations in the same order as it does in relation to the fourth configurable power module 140 when configured to operate in its fault blocking mode, i.e. to oppose and extinguish a fault current $I_{Fault}$ flowing in the first direction $D_1$.

In the meantime, when configuring the fifth configurable power module 170 to operate in the second fault blocking mode the second control unit 144 carries out the following operations in the following order.

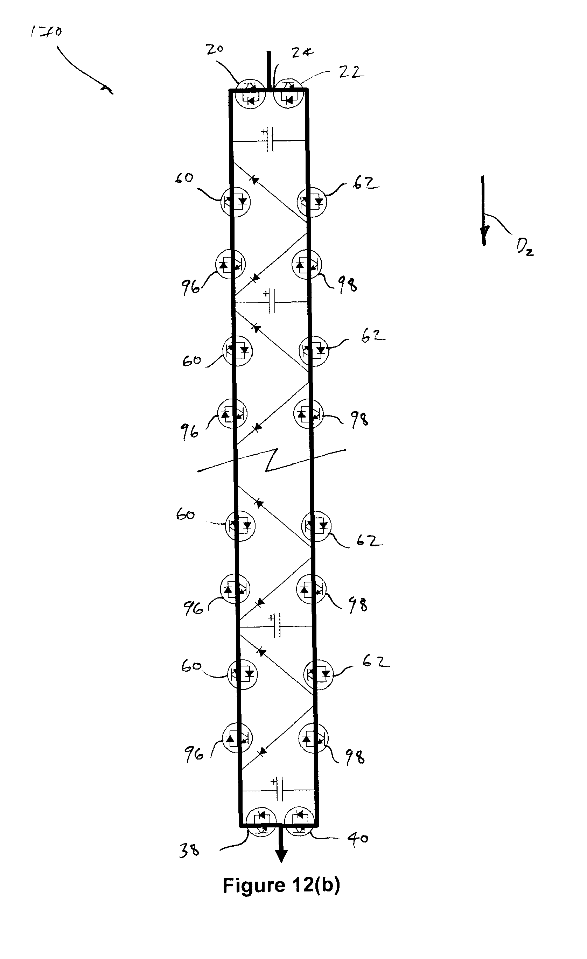

It first switches on all of first, second, third and fourth switching elements 20, 22, 38, 40 in the first and second sub-modules 12, 14 and it operates the first, second, third and fourth further bi-directional current flow control elements 60, 62, 96, 98 in each of the plurality of first and second connection module portions 56, 92 to permit current flow in the second direction $D_2$, i.e. as shown schematically in Figure 12(b). In this regard, the anti-parallel diode 32 in each of the first and second further bi-directional current flow control elements 60, 62 allows such current flow and so there is no need for the second control unit 144 to physically switch on each of these elements 60, 62.

In this arrangement the fault current $I_{Fault}$ flows directly through the fifth configurable power module 170 and is again shared between the first and second limbs 48, 52, and the corresponding string of first and third 60, 96 or second and fourth 62, 98 further bi-directional current flow control elements such that lower conduction losses arise.

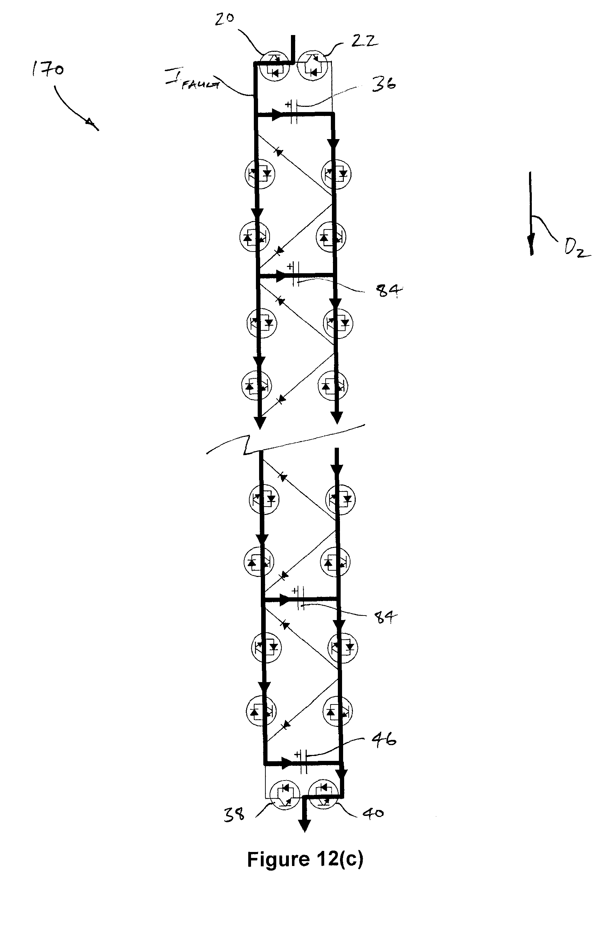

The second control unit 144 then switches off the second and third switching elements 22, 38 to direct the fault current $I_{Fault}$ to flow through each of the plurality of energy storage devices 26, 44, 82, i.e. each of the first, second and further capacitors 34, 46, 84 so as to store energy, i.e. charge, in each of the first, second and further capacitors 34, 46, 84, i.e. as shown in Figure 12(c).

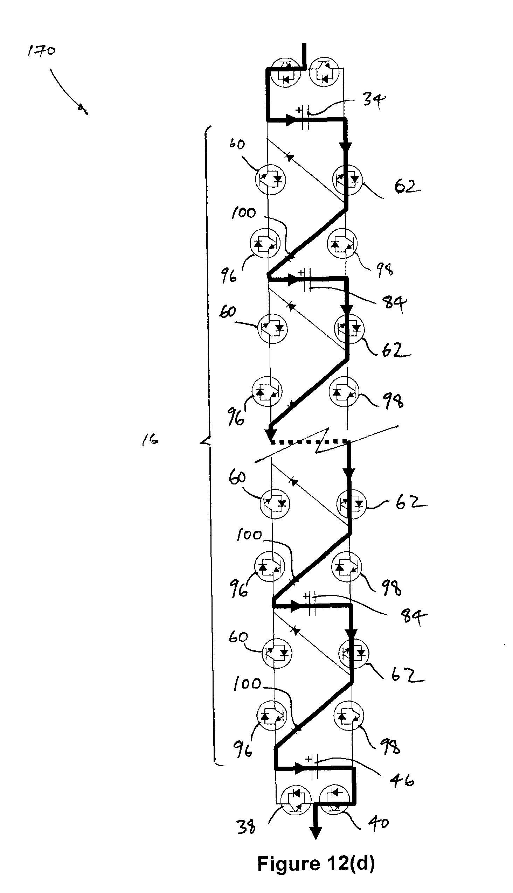

Thereafter the second control unit 144 operates the connection module 16 in its second connection mode, i.e. switches off each of the first, second, third and fourth further bi-directional current flow control elements 60, 62, 96, 98 in the various first and second connection module portions 56, 92 in order to establish a second series connection between all of the capacitors 34, 46, 84 via the respective second unidirectional current flow control element 100, i.e. second diode 102 of each second connection module portion 92, i.e. as shown in Figure 12(d).

This permits each of the capacitors 34, 46, 84 to combine and generate a blocking voltage which is essentially equal to the sum of the voltage, i.e. charge, across each of the capacitors 34, 46, 84 to oppose the fault current $I_{Fault}$ flowing in the second direction $D_2$ and thereby extinguish the fault current $I_{Fault}$.

Such switching off of the first, second, third and fourth further bi-directional current flow control elements 60, 62, 96, 98, and switching off of the third and fourth further bi-directional current flow control elements 96, 98 in particular, may again be done progressively, e.g. in stages, in order to modify the waveform shape of the fault current $I_{Fault}$.

The fifth configurable power module 170 may be similarly incorporated in a DC circuit breaker apparatus of the type shown in Figure 10.

**Claims**

1. A configurable power module, for use in a power transmission network, comprising:

   a first sub-module including a first pair of series-connected switching elements separated by a first connection terminal and connected in parallel with a first energy storage device; and
   a second sub-module including a second pair of series-connected switching elements separated by a second connection terminal and connected in parallel with a second energy storage device, the first and second sub-modules being interconnected by a connection module operable to interconnect the first and second sub-modules in first and second connection modes, the connection module in the first connection mode establishing a parallel connection between the first and second energy storage devices which has bidirectional current flow characteristics, and the connection module in the second connection mode interconnecting the first and second energy storage devices to permit the first and second energy storage devices to combine and generate a blocking voltage to oppose the flow of current between the first and second connection terminals.

2. A configurable power module according to Claim 1 wherein the connection module in the first connection mode establishes a parallel connection between the first and second energy storage devices which allows current to flow within the parallel connection in first and second opposite directions.

3. A configurable power module according to Claim 1 or Claim 2 wherein the connection module includes:

   a first limb which extends between a first side of each of the first and second energy storage devices;
   a second limb which extends between a second side of each of the first and second energy storage devices; and
   a first connection module portion which includes a first pair of bi-directional current flow control elements, one bi-directional current flow control element lying within the first limb and the other bi-directional current flow control element lying within the second limb, each of the bi-directional current flow control elements selectively blocking current flow through the corresponding limb in the same first direction and permitting current to flow through the corresponding limb in the same second direction opposite the first direction.

4. A configurable power module according to Claim 3 wherein the first connection module portion further includes a first unidirectional current flow control element which permits current to flow therethrough in only one direction, the first unidirectional current flow control element interconnecting the first and second limbs to selectively establish a first series connection between the first and second energy storage devices and permit current to flow through the connection module in the first direction when each of the first pair of bi-directional current flow control elements is blocking current flow in the first direction.

5. A configurable power module according to Claim 3 or Claim 4 wherein the connection module includes a plurality of first connection module portions, and adjacent pairs of the first connection module portions are separated by a further energy storage device connected in parallel between the first and second limbs.

6. A configurable power module according to Claim 4 wherein the connection module additionally includes a second connection module portion including a second pair of bi-directional current flow control elements one of which lies within the first limb and the other of which lies within the second limb, each of the second pair of bi-directional current flow control elements selectively blocking current flow through the corresponding limb in the same second direction opposite the first direction in which each of the first pair of bi-directional current flow control elements of the first connection module portion selectively blocks current flow, the second module portion further including a second unidirectional current flow control element which interconnects the first and second limbs to establish a second series connection between the first and second energy storage devices and permits current to flow through the connection module in the second direction when each of the second pair of bi-directional current flow control elements is blocking current flow in the second direction, the second connection module portion lying next to the first connection portion to define a bi-directional module portion.

7. A configurable power module according to Claim 6 wherein the connection module includes a plurality of first and second connection module portions lying next to one another to define respective bi-directional module portions, adjacent pairs of bi-directional module portions being separated by a further energy storage device connected in parallel between the first and second limbs.

8. A configurable power module according to any preceding claim further including a control unit arranged in operative communication with each of the first and second sub-modules and the connection module, the control unit in use configuring the configurable power module to operate in a normal mode and in a fault blocking mode,
   the control unit when configuring the configurable power module to operate in the normal mode operating the connection module in the first connection mode in which the parallel-connected energy storage devices combine with one another to form a larger combined energy store, and the control unit further switching on and off respective switching elements in the first and second sub-modules to selectively direct current through the combined energy store such that the configurable power module is able to provide a voltage source commensurate in size with the larger size of the combined energy store, and
   the control unit when configuring the configurable power module to operate in the fault blocking mode switching off all of the switching elements in the first and second sub-modules and operating the connection module in the second connection mode.

9. A voltage source converter comprising at least one converter limb which includes first and second limb portions each of which includes at least one configurable power module according to any preceding claim and at least one half-bridge module.

10. A configurable power module according to Claim 5 when dependent on Claim 4, or according to Claim 7, further including a control unit arranged in operative communication with each of the first and second sub-modules and the connection module, the control unit in use configuring the configurable power module to operate in a normal mode and in a fault blocking mode,
the control unit when configuring the configurable power module to operate in the normal mode switching off all of the switching elements in the first and second sub-modules and operating the bi-directional current flow control elements in the connection module to block current flow between the first and second connection terminals, and
the control unit when configuring the configurable power module to operate in the fault blocking mode carrying out the following operations in the following order:

(i) switching on all of the switching elements in the first and second sub-modules and operating the bi-directional current flow control elements in the connection module to permit current flow between the first and second connection terminals;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing between the first and second connection terminals.

11. A configurable power module according to Claim 10 wherein the control unit in use configures the configurable power module to operate in a first fault blocking mode to block a fault current flowing in the first direction between the first and second connection terminals, the control unit when so configuring the configurable power module carrying out the following operations in the following order:

(i) switching on all of the switching elements in the first and second sub-modules and operating the bi-directional current flow control elements in the connection module to permit current flow in the first direction;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing in the first direction.

12. A configurable power module according to Claim 10 when dependent on Claim 7 wherein the control unit in use additionally configures the configurable power module to operate in a second fault blocking mode to block a fault current flowing in the second direction between the first and second connection terminals, the control unit when so configuring the configurable power module carrying out the following operations in the following order:

(i) switching on all of the switching elements in the first and second sub-modules and operating the bi-directional current flow control elements in the connection module to permit current flow in the second direction;
(ii) switching off one of the switching elements in each of the first and second sub-modules to direct current to flow through each of the plurality of energy storage devices and thereby store energy in each said energy storage device; and
(iii) operating the connection module in its second connection mode to permit each of the plurality of energy storage devices to combine and generate a blocking voltage to oppose a fault current flowing in the second direction.

13. A configurable power module according to any of Claims 10 to 12 wherein the control unit when operating the connection module in its second connection mode operates the connection module to interconnect the plurality of energy storage devices in series with one another.

14. A configurable power module according to Claim 13 wherein the control unit when operating the connection module in its second connection mode progressively interconnects respective ones of the plurality of energy storage devices.

15. A configurable power module according to any of Claims 10 to 14 wherein each energy storage device includes a surge arrester connected in parallel therewith.

**16.** A direct current circuit breaker apparatus comprising main and ancillary current paths, the main current path including an electronic switch and a mechanical circuit breaker arranged in series with one another, and the ancillary current path including a configurable power module according to Claim 5 when dependent on Claim 4, or according to any of Claims 10 to 15.

**17.** A method of configuring a configurable power module according to any of Claims 1 to 7 wherein:

configuring the configurable power module to operate in a normal mode comprises the steps of:

(a) operating the connection module in the first connection mode in which the parallel-connected energy storage devices combine with one another to form a larger combined energy store; and
(b) switching on and off respective switching elements in the first and second modules to selectively direct current through the combined energy store such that the configurable power module provides a voltage source commensurate in size with the larger size of the combined energy store; and configuring the configurable power module to operate in a fault blocking mode comprises the steps of:
(c) switching off all of the switching elements in the first and second sub-modules; and
(d) operating the connection module in the second connection mode.

**18.** A method of configuring a configurable power module according to Claim 5 when dependent on Claim 4, or according to Claim 7, wherein:

configuring the configurable power module to operate in a normal mode comprises the steps of:

(a) switching off all of the switching elements in the first and second sub-modules; and
(b) operating the bi-directional current flow control elements in the connection module to block current flow between the first and second connection terminals; and

configuring the configurable power module to operate in the fault blocking mode comprises in the following order the steps of:

(c) switching on all of the switching elements in the first and second sub-modules and operating the bi-directional current flow control elements in the connection module to permit current flow between the first and second connection terminals;
(d) switching off one of the switching elements in each of the first and second sub-modules to direct current to flow through each of the plurality of energy storage devices and thereby store energy in each said energy storage device; and
(e) operating the connection module in its second connection mode to permit each of the plurality of energy storage devices to combine and generate a blocking voltage to oppose a fault current flowing between the first and second connection terminals.

Figure 1(a)

Figure 1(b)

Figure 2(a)

Figure 2(b)

**Figure 3**

**Figure 4(a)**

**Figure 4(b)**

**Figure 5**

**Figure 6(a)**

**Figure 6(b)**

**Figure 7**

**Figure 8**

**Figure 9(a)**

**Figure 9(b)**

**Figure 9(c)**

**Figure 9(d)**

**Figure 10**

**Figure 11**

**Figure 12(a)**

**Figure 12(b)**

**Figure 12(c)**

EP 2 852 043 A1

**Figure 12(d)**

33

Europäisches
Patentamt

European
Patent Office

Office européen
des brevets

## EUROPEAN SEARCH REPORT

Application Number

EP 13 18 5595

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2012/072168 A2 (UNIV MUENCHEN TECH [DE]; WEYH THOMAS [DE]; GOETZ STEFAN M [DE]) 7 June 2012 (2012-06-07)<br>* page 7, lines 11-16 *<br>* page 8, lines 10-15 *<br>* page 9, lines 2-8 *<br>* page 9, line 5 - page 12, line 4 *<br>* figures 7,8,21a,21b,21c,31 *<br>* page 16, lines 4-25 *<br>* page 27, lines 25-31 *<br>* page 28, lines 14-24 *<br>* page 29, lines 18-21 *<br>* page 32, lines 1-11 *<br>----- | 1-5,8,9,<br>17<br>17<br>6,7,<br>10-16,18 | INV.<br>H02M7/483 |
| Y | N AHMED ET AL: "Prospects and challenges of future HVDC SuperGrids with modular multilevel converters",<br>EPE 2011,<br>1 January 2011 (2011-01-01), pages 1-10,<br>XP055115782,<br>Birmingham<br>ISBN: 978-9-07-581515-3<br>* Sections "Modular Multilevel Converter" (pages 5-7) and "Short-circuit issues" (pages 7-8) *<br>----- | 17 | |

TECHNICAL FIELDS
SEARCHED        (IPC)

H02M

The present search report has been drawn up for all claims

| Place of search | Date of completion of the search | Examiner |
|---|---|---|
| Munich | 29 April 2014 | Hanisch, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 18 5595

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2014

| Patent document cited in search report | Publication date | Patent family member(s) | Publication date |
|---|---|---|---|
| WO 2012072168 A2 | 07-06-2012 | EP 2647119 A2<br>US 2014049230 A1<br>WO 2012072168 A2 | 09-10-2013<br>20-02-2014<br>07-06-2012 |

EPO FORM P0459

For more details about this annex : see Official Journal of the European Patent Office, No. 12/82